# EUROPEAN PATENT APPLICATION

(11) **EP 4 712 622 A1**
(43) Date of publication of application: **18.03.2026**
(21) Application number: 23936071.2
(22) Date of filing: 10.05.2023
(51) Int. Cl.: H04W 72/0446, H04W 72/21, H04W 74/08

(54) **COMMUNICATION METHOD AND TERMINAL DEVICE**

(71) Applicant: Quectel Wireless Solutions Co., Ltd., Shanghai 201601 (CN)
(72) Inventor: ZHAO, Zheng, Shanghai 201601 (CN); LYU, Ling, Shanghai 201601 (CN); YANG, Zhongzhi, Shanghai 201601 (CN)
(74) Representative: Fish & Richardson P.C.
(86) International application number: PCT/CN2023/093250
(87) International publication number: WO 2024/229750

(57) **Abstract**

A method for communication and a terminal device are provided. The method includes: triggering, by a terminal device, a random access procedure at or before a first time when a timing advance (TA) value becomes invalid, if the first time is within a first time window and a scheduling request, SR, in a pending state exists. The first time window is a time window during which a network device does not receive uplink signals. If the terminal device initiates, in response to the invalidation of the TA value, the random access procedure until it is about to send the SR after the first time window, it will result in unnecessary waiting by the terminal device. However, in the present disclosure, the terminal device initiates the random access procedure at or before the first time when the TA value becomes invalid. Therefore, the time for initiating the random access procedure in the present disclosure is earlier, which can avoid unnecessary waiting by the terminal device, thereby reducing data transmission latency and improving communication efficiency.

## Description

### TECHNICAL FIELD

The present disclosure relates to the field of communication technology, and more specifically to a method for communication and a terminal device.

### BACKGROUND

In some communication systems, if there is uplink data to be transmitted, the terminal device triggers a scheduling request (SR). Through the SR, the terminal device can request the allocation of uplink resources from the network device to transmit uplink data. After sending the SR, if the terminal device does not receive the allocated uplink resources from the network device, the SR remains in a pending state. For the SR in the pending state, the terminal device sends the SR again and count the number of transmissions using an SR counter. If the number of SR transmissions reaches the maximum limit and the terminal device still has not received the allocated uplink resources from the network device, the terminal device initiates random access.

If there is a SR in the pending state within a first time window (e.g., a time window during which the network device does not receive uplink signals), the terminal device pauses the sending of the SR, but retains the configuration of the SR and the SR counter. However, for the above scenario, in the case where a timing advance (TA) value becomes invalid within the first time window, relevant technologies have not yet clarified the behavior of the terminal device.

### SUMMARY

The present disclosure provides a method for communication and a terminal device. Various aspects related to the present disclosure are described below.

According to a first aspect, a method for communication is provided, including: triggering, by a terminal device, a random access procedure at or before a first time when a timing advance (TA) value becomes invalid, if the first time is within a first time window and a scheduling request, SR, in a pending state exists; where the first time window is a time window during which a network device does not receive uplink signals.

In some embodiments, the triggering, by the terminal device, the random access procedure at or before the first time includes: triggering, by the terminal device, the random access procedure before the first time if the terminal device is unable to receive an update indication of the TA value before the first time.

In some embodiments, the terminal device being unable to receive the update indication of the TA value before the first time includes: the first time being in a second time window, wherein the second time window is a time window during which the network device does not send downlink signals.

In some embodiments, the random access procedure is triggered at a start time of the second time window.

In some embodiments, the second time window is used to implement network energy saving (NES).

In some embodiments, the triggering the random access procedure includes: triggering the random access procedure when a first condition is met.

In some embodiments, the first condition includes that a buffer of the terminal device has data required to be transmitted.

In some embodiments, the buffer of the terminal device having the data required to be transmitted includes: a discard timer corresponding to the data not expiring.

In some embodiments, the first time window is used to implement NES.

In some embodiments, the first time is a time when a time advance timer corresponding to the TA value expires.

In some embodiments, the method further includes: deleting, by the terminal device, a parameter of the SR; and/or zeroing out, by the terminal device, a count value of the SR.

According to a second aspect, a terminal device is provided, including: a triggering unit, configured to trigger a random access procedure at or before a first time when a timing advance, TA value becomes invalid, if the first time is within a first time window and a scheduling request, SR, in a pending state exists; where the first time window is a time window during which a network device does not receive uplink signals.

In some embodiments, the triggering the random access procedure at or before the first time includes: triggering the random access procedure before the first time if the terminal device is unable to receive an update indication of the TA value before the first time.

In some embodiments, the terminal device being unable to receive the update indication of the TA value before the first time includes: the first time being in a second time window, wherein the second time window is a time window during which the network device does not send downlink signals.

In some embodiments, the random access procedure is triggered at a start time of the second time window.

In some embodiments, the second time window is used to implement network energy saving (NES).

In some embodiments, the triggering the random access procedure includes: triggering the random access procedure when a first condition is met.

In some embodiments, the first condition includes that a buffer of the terminal device has data required to be transmitted.

In some embodiments, the buffer of the terminal device having the data required to be transmitted includes: a discard timer corresponding to the data not expiring.

In some embodiments, the first time window is used to implement NES.

In some embodiments, the first time is a time when a time advance timer corresponding to the TA value expires.

In some embodiments, the terminal device is further configured to: delete a parameter of the SR; and/or zero out a count value of the SR.

According to a third aspect, a terminal device is provided, including: a processor and a memory, where the memory is configured to store one or more programs, and the processor is configured to invoke the program in the memory to cause the terminal device to perform some or all of the operations in the method according to the first aspect.

According to a fourth aspect, an embodiment of the present disclosure provides a communication system including the above terminal device. In another possible design, the system further includes other devices that interact with the terminal device in solutions provided in the embodiments of the present disclosure.

According to a fifth aspect, a computer-readable storage medium is provided, where the computer-readable storage medium stores a computer program, and the computer program causes the terminal device to perform some or all of the operations in the methods according to various aspects described above.

According to a sixth aspect, an embodiment of the present disclosure provides a computer program product, where the computer program product includes a non-transitory computer-readable storage medium storing a computer program, and the computer program is executable to cause the terminal device to perform some or all of the operations in the methods according to various aspects described above. In some implementations, the computer program product may be a software installation package.

According to a seventh aspect, an embodiment of the present disclosure provides a chip, where the chip includes a memory and a processor, and the processor may invoke the computer program from the memory and run the computer program, to implement some or all of the operations in the methods according to various aspects described above.

If the terminal device initiates, in response to the invalidation of the TA value, the random access procedure until it is about to send the SR after the first time window, it will result in unnecessary waiting by the terminal device. However, in the present disclosure, the terminal device initiates the random access procedure at or before the first time when the TA value becomes invalid. Therefore, the time for initiating the random access procedure in the present disclosure is earlier, which can avoid unnecessary waiting by the terminal device, thereby reducing data transmission latency and improving communication efficiency.

### BRIEF DESCRIPTION OF THE DRAWINGS

FIG. 1 is a schematic diagram of a wireless communication system applied in an embodiment of the present disclosure.
FIG. 2 is an example diagram of a scenario to which an embodiment of the present disclosure is applicable.
FIG. 3 is another example diagram of a scenario to which an embodiment of the present disclosure is applicable.
FIG. 4 is a schematic flowchart of a method for communication according to an embodiment of the present disclosure.
FIG. 5 is another example diagram of a scenario to which an embodiment of the present disclosure is applicable.
FIG. 6 is a schematic structural diagram of a terminal device according to an embodiment of the present disclosure.
FIG. 7 is a schematic structural diagram of an apparatus for communication according to an embodiment of the present disclosure.

### DETAILED DESCRIPTION OF THE EMBODIMENTS

The technical solutions in the present disclosure will be described below with reference to the accompanying drawings.

### COMMUNICATION SYSTEM

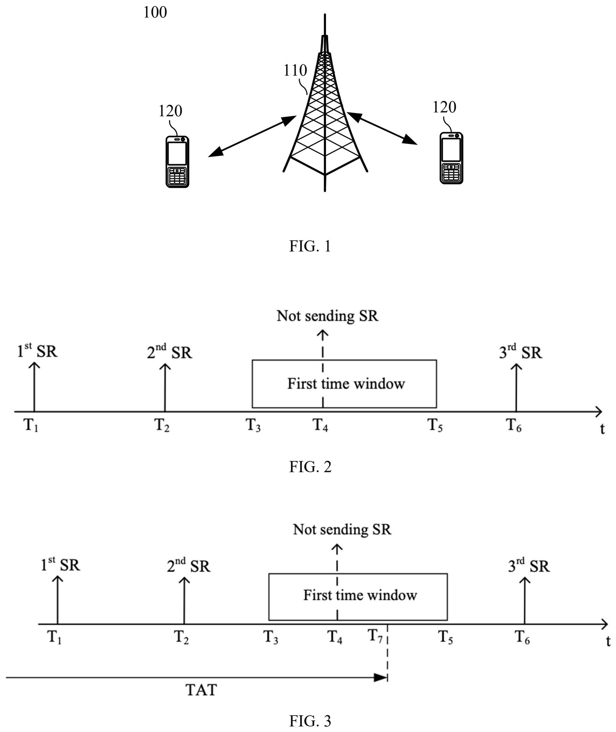

FIG. 1 is a wireless communication system 100 applied in embodiments of the present disclosure. The wireless communication system 100 includes a network device 110 and a terminal device 120, and the network device 110 may be a device that communicates with the terminal device 120. The network device 110 provides communication coverage for a particular geographic area and communicates with the terminal device 120 located within the coverage area.

FIG. 1 exemplarily shows a network device and two terminals. Optionally, the wireless communication system 100 may include a plurality of network devices, and the coverage of each network device may include other numbers of terminals, which is not limited in the embodiments of the present disclosure.

Optionally, the wireless communication system 100 may further include another network entity such as a network controller, a mobility management entity, etc., which is not limited in the embodiments of the present disclosure.

It should be understood that the technical solutions in the embodiments of the present disclosure may be applied to various communication systems, for example, a 5^{th} generation (5G) or new radio (NR) system, a long term evolution (LTE) system, an LTE frequency division duplex (FDD) system, an LTE time division duplex (TDD) system, and the like. The technical solutions provided in the present disclosure may further be applied to a future communication system such as a sixth-generation mobile communication system, a satellite communication system, or the like.

The terminal device in the embodiments of the present disclosure may also be referred to as user equipment (UE), an access terminal, a subscriber unit, a subscriber station, a mobile station (MS), a mobile terminal (MT), a remote station, a remote terminal, a mobile device, a user terminal, a terminal, a wireless communication device, a user agent, or a user equipment. The terminal device in the embodiments of the present disclosure may be a device that provides voice and/or data connectivity to a user, and may be used to connect a person, an object, and a machine, for example, a handheld device or a vehicle-mounted device having a wireless connection function. The terminal device in the embodiments of the present disclosure may be a mobile phone, a pad, a notebook computer, a palmtop computer, a mobile internet device (MID), a wearable device, a virtual reality (VR) device, an augmented reality (AR) device, a wireless terminal in industrial control, a wireless terminal in self-driving, a wireless terminal in a remote medical surgery, a wireless terminal in a smart grid, a wireless terminal in transportation safety, a wireless terminal in a smart city, a wireless terminal in smart home, etc. Optionally, the terminal device may serve as a base station. For example, the terminal device may serve as a scheduling entity that provides a sidelink signal between terminal devices in vehicle-to-everything (V2X), device-to-device (D2D), or the like. For example, cellular phones and automobiles communicate with each other using sidelink signals. The cellular phone communicates with the smart home device without relaying communication signals through the base station.

The network device in the embodiments of the present disclosure may be a device configured to communicate with the terminal device, and the network device may also be referred to as an access network device or a wireless access network device, e.g., the network device may be a base station. The network device in the embodiments of the present disclosure may refer to a radio access network (RAN) node (or device) that accesses the terminal device to a wireless network. The base station may broadly cover various names in the following or be replaced with the following names. For example, a node B (NodeB), an evolved NodeB (eNB), a next generation NodeB (gNB), a relay station, an access point, a transmitting and receiving point (TRP), a transmitting point (TP), a master station (MeNB), a secondary station (SeNB), a multi-standard radio (MSR) node, a femtocell, a network controller, an access node, a wireless node, an access point (AP), a transmission node, a transceiver node, a base band unit (BBU), a remote radio unit (RRU), an active antenna unit (AAU), a remote radio unit (RRH), a central unit (CU), a distributed unit (DU), a positioning node, and the like. The base station may be a macro base station, a micro base station, a relay node, a donor node or the like, or a combination thereof. The base station may also refer to a communication module, a modem, or a chip for being disposed in the foregoing device or apparatus. The base station may also be a mobile switching center and a device that plays a role of the base station in the D2D, V2X, and machine-to-machine (M2M) communication, a network side device in a 6G network, and a device that plays a role of the base station in a future communication system, etc. The base station supports networks of the same or different access technologies. The specific technology adopted by the network device and a specific form of the device in the embodiments of the present disclosure are not limited in the embodiments of the present disclosure.

The base station may be fixed or mobile. For example, a helicopter or drone may be configured to serve as a mobile base station, and one or more cells move according to the position of the mobile base station. In other examples, a helicopter or drone may be configured to serve as a device in communication with another base station.

In some deployments, the network device in the embodiments of the present disclosure may refer to the CU or the DU, or the network device includes the CU and the DU. The gNB may also include the AAU.

The network device and the terminal device may be deployed on land, including indoor or outdoor, handheld or vehicle-mounted, may be deployed on a water surface, and may also be deployed on an aircraft, a balloon, and a satellite in the air. A scenario in which the network device and the terminal device are located is not limited in the embodiments of the present disclosure.

It should be understood that all or part of functions of the communication device in the present disclosure may also be implemented by a software function running on hardware or implemented by a virtualization function instantiated on a platform (e.g., a cloud platform).

### NETWORK ENERGY SAVING (NES)

Network devices are typically deployed to meet high traffic demands during peak periods. As a result, energy consumption of network devices is relatively high. Currently, some communication standards (such as R18 standard) have introduced NES technology. Based on NES technology, network devices can reduce energy consumption while minimizing any sacrifice in network performance.

In some implementations, NES may be achieved by configuring a time window for the network device. With the above time window configured, the network device may notify the terminal device of this time window. Within this time window, the network device may satisfy one or more of the following characteristics: not sending downlink signals, not receiving uplink signals, reducing the number of transmit antennas, reducing the number of receive antennas, lowering transmission power, and decreasing the number of transmissions of synchronization signal/PBCH blocks (SSB). The signals may include one or more of the following: reference signals, data, channels, etc. The data may include one or more of dynamic scheduling data, semi-static scheduling data, and static scheduling data.

Taking the time window having the characteristic of "the network device does not receive uplink signals" as an example, the terminal device may not send the SR during the "network device does not receive uplink signals" time window; and/or, the terminal device does not send uplink data through configured grant (CG) during this time window. However, in some cases, the terminal device may send certain uplink signals during the "network device does not receive uplink signals" time window. For example, the terminal device may send a physical random access channel (PRACH) during the "network device does not receive uplink signals" time window to achieve random access.

It should be noted that time windows satisfying different characteristics may be configured independently without affecting each other. Independent configuration may refer to that configuration parameters of different time windows may be different, or the configuration parameters of different time windows may be configured separately. Configuration parameters may include one or more of: window length, start time, end time, etc. Different time windows may partially or fully overlap. Taking the characteristics of "the network device does not receive uplink signals" and "the network device does not send downlink signals" as an example, two independent time windows may be configured for these two characteristics, and the two time windows do not affect each other. This means that during one time window, the network device may not receive uplink signals, while during another time window, the network device may not send downlink signals. It should be noted that mutually independent time windows may overlap or not overlap, which is not limited in the present disclosure.

### SR

In some communication systems (such as NR systems), if there is uplink data that needs to be transmitted, the terminal device may trigger an SR. If there are resources available for transmitting the SR, the SR may be sent. Through the SR, the terminal device may request allocation of uplink resources from the network device to transmit uplink data. After sending the SR, if the terminal device does not receive the uplink resources allocated by the network device, the SR may remain in a pending state. For the SR in the pending state, the terminal device may send the SR again and record the number of transmissions via an SR counter. If the number of transmissions of the SR reaches the maximum limit and the terminal device still has not received the uplink resources allocated by the network device, the terminal device may initiate random access.

If the terminal device has already started sending the SR before the first time window, it may pause the sending of the SR within the first time window but retain a configuration of the SR and a count value of the SR counter. After the first time window ends, the terminal device may continue sending the SR, and the SR counter may continue counting. The first time window, for example, may be a time window during which the network device does not receive uplink signals. For ease of understanding, the following describes with FIG. 2 as an example.

As shown in FIG. 2, before time T₁, the terminal device has uplink data arriving. Therefore, the terminal device triggers the SR. At time T₁, the terminal device sends a first SR (1^{st} SR). At time T₂, the terminal device sends a second SR (2^{nd} SR). However, after both the first SR and the second SR, the terminal device does not receive the allocation of uplink resources. Subsequently, a time range covered by the first time window arrives. The terminal device does not send the SR during the first time window (between T₃ and T₅). As shown in FIG. 2, at time T₄ within the first time window, although there are SR resources, which would normally allow for an SR send, the terminal device does not send the SR at time T₄. Wait until time T₆ after the first time window ends, the terminal device may continue sending the SR and continue counting the number of SR transmissions. Therefore, the SR count at time T₆ after the first time window is 3, i.e., a third SR (3^{rd} SR). If the count value of the SR counter reaches a maximum threshold and the terminal device still has not received uplink resources, the terminal device may initiate random access.

It should be noted that after triggering the SR, the SR is sent only when a condition for sending the SR is met. The condition for sending the SR may include validity of the TA value. The following describes the TA.

### TA

All uplink signals (including SR) sent by the terminal device should have a valid TA value. The validity of the TA may be managed by a timing advance timer (TAT). When the TAT is operating normally (i.e., without expiring), the TA value is valid. The TAT may be maintained by the terminal device. The network device may set or update the TA value through a timing advance command (TAC). When the terminal device receives a new TA value, it may start or restart the TAT.

If the TAT expires and the terminal device has not received a TAC for updating the TA from the network device, the TA value may be considered invalid. In the case of an invalid TA value, the terminal device enters an uplink out-of-sync state and cannot send any uplink signals (e.g., the above SR) other than a preamble.

If the time at which the TA value becomes invalid occurs within the first time window and a SR in a pending state exists, the relevant technology has not yet clarified the behavior of the terminal device. As a possible implementation, after the first time window ends, when the terminal device is ready to send the SR again, it will find that the TA value has become invalid, thus initiating random access. For the scenario shown in FIG. 2, the situation where the TA value becomes invalid within the first time window is described using FIG. 3 as an example.

In FIG. 3, at time T₁, the terminal device sends the first SR. At time T₂, the terminal device sends the second SR. In the first time window between times T₃ and T₅, the terminal device does not send any SR. At time T₇, the TAT expires, meaning the TA value becomes invalid. Since neither the first SR nor the second SR received uplink resource allocation after being sent, the terminal device is about to send the third SR at time T₆ after the first time window ends. At time T₆, the terminal device discovers that the TA value has become invalid. Therefore, the terminal device does not send any SR and initiates random access.

If the terminal device only discovers that the TAT expires and initiates random access while about to send the SR, it may lead to various issues. For example, the terminal device may have unnecessarily waited for a period of time. That is, the terminal device undergoes unnecessary waiting from the time (e.g., time T₇) when the TA value becomes invalid to the time (e.g., time T₆) when the terminal device is about to send the SR. This unnecessary waiting by the terminal device results in unreasonable communication delays and reduces communication efficiency.

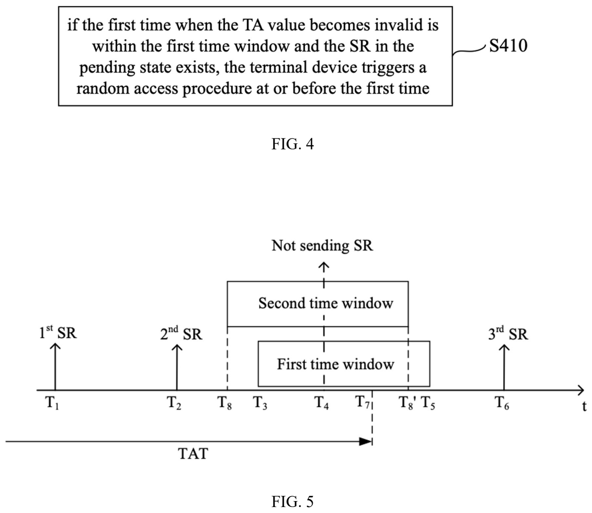

To address the above situation, the present disclosure proposes that the random access procedure may be triggered at or before the first time when the TA value becomes invalid. The following describes in conjunction with FIG. 4.

FIG. 4 is a schematic flowchart of a method for communication provided in an embodiment of the present disclosure. The method shown in FIG. 4 may be implemented by the terminal device. The method shown in FIG. 4 may include operation S410.

At operation S410, if the first time when the TA value becomes invalid is within the first time window and the SR in the pending state exists, the terminal device triggers a random access procedure at or before the first time.

The first time window may be a time window during which the network device does not receive uplink signals. The signals may include one or more of: reference signals, data, channels, etc. The data may include one or more of dynamic scheduling data, semi-static scheduling data, and static scheduling data. Uplink signals may be transmitted over the uplink. The uplink signals may include the SR. In other words, during the first time window, the network device may not receive uplink signals, including the SR. Correspondingly, the terminal device may not send the corresponding uplink signals. For example, the terminal device may not send the SR during the "network device does not receive uplink signals" time window; and/or, the terminal device does not send uplink data via CG during that time window.

It should be noted that during the first time window, the terminal device may send a PRACH, and the network device may receive the PRACH to achieve random access.

In some embodiments, within the first time window, the network device may not only achieve the characteristic of "not receiving uplink signals," but also achieve other characteristics. For example, within the first time window, the network device may also satisfy one or more of the following characteristics: not sending downlink signals, reducing the number of transmit antennas, reducing the number of receive antennas, lowering transmission power, and reducing the transmission of the SSB.

The first time window may be used to implement NES. That is to say, the first time window may be a time window during which the network does not receive uplink signals in a power-saving mode. In other words, during the first time window, the network device does not receive uplink signals to reduce the energy consumption of the network device.

It should be understood that the time window may be a period of time or a time range. This period of time may be represented by one or more of parameters such as a start time, an end time, a duration, etc.

The first time being within the first time window may be understood as that the first time may be any time within the first time window. For example, the first time may be the start time of this period. Alternatively, the first time may be the end time of this period.

The first time may be the time when the TA value becomes invalid. In other words, before the first time, the TA value may be valid, and after the first time, the TA value may be invalid. The time when the TA value becomes invalid may be, for example, the time when the TAT corresponding to the TA value expires. In other words, if the terminal device has not received an update indication of the TA value during the TAT operation, the end time of the TAT may be the first time.

For the case where the first time is within the first time window and the SR in the pending state exists, the present disclosure provides a corresponding technical solution. As in operation S410, the terminal device may trigger the random access procedure at or before the first time when the TA value becomes invalid.

As described above, if the terminal device initiates random access for the case of TA value becoming invalid when it is about to send the SR after the first time window, it will lead to unnecessary waiting by the terminal device. In the present disclosure, the terminal device may initiate random access before or at the first time when the TA value becomes invalid. Therefore, the time for initiating random access is earlier, which can avoid unnecessary waiting by the terminal device, thereby reducing data transmission latency and improving communication efficiency.

For ease of understanding, the present disclosure describes continuing with FIG. 3 as an example. In FIG. 3, the time T₇ may be the first time. The terminal device may trigger the random access procedure at the time T₇. As shown in FIG. 3, the time T₇ is earlier than the time T₆ for triggering the third SR. Between the time T₇ and the time T₆, the terminal device does not need to wait unnecessarily. Therefore, the present disclosure may trigger the random access procedure in advance, thus avoiding waste of communication time and improving communication efficiency.

The above example using the scenario shown in FIG. 3 illustrates that the terminal device triggers random access at the first time. This embodiment is merely an example. The terminal device may also trigger random access at a time earlier than the first time. That is, the terminal device may trigger random access before the TA value becomes invalid. For example, if the terminal device cannot receive the update indication of the TA value before the first time, the terminal device may trigger the random access procedure before the first time. The update indication of the TA value may be carried in the TAC mentioned above.

As an implementation, the system may be configured with a second time window. The second time window may be a time window during which the network device does not send downlink signals. The second time window may, for example, be used for NES. For the case where the second time window is configured, the terminal device being unable to receive the update indication of the TA value before the first time may include that the first time is within the second time window. In other words, if the first time is within both the first time window and the second time window, the terminal device may initiate random access before the first time.

During the second time window, the network device does not send downlink signals, so the terminal device will not receive the update indication of the TA. Therefore, compared to the first time, the terminal device may initiate random access earlier, thereby further reducing transmission latency.

The first time window and the second time window may be independently configured, meaning that configuration parameters of the two time windows may be independent of each other. In other words, one or more of the start time, end time, duration, etc., of the first time window may differ from the corresponding parameters of the second time window. Alternatively, the configuration parameters of the first time window may be the same as those of the second time window. That is, the first time window may overlap with the second time window. As an example, the first time window may also be configured as a time window during which the network device does not send downlink signals.

The start time of the second time window may be the second time. The terminal device may trigger random access at the second time. That is, the time for triggering the random access procedure is the start time of the second time window. As described above, in the second time window, the network device does not send downlink signals, so the terminal device will not receive the update indication of the TA. That is, the start time of the second time window is the earliest time when the update indication of the TA will not be received. Therefore, triggering random access at the second time allows for random access being performed as early as possible, thereby reducing the communication delay as much as possible. The following describes with the scenario shown in FIG. 5 as an example.

As shown in FIG. 5, the network device is configured with a second time window on the basis of the scenario shown in FIG. 3. The start time of the second time window may be the time T₈, and the end time of the second time window may be the time T₈'. The first time T₇ is within the second time window. In the scenario shown in FIG. 5, the terminal device may initiate random access in advance at the start time T₈ of the second time window.

It should be noted that, in some embodiments, the terminal device may initiate random access at any time between the second time and the first time. In other words, the terminal device may trigger random access at any time during the period from the start time when the terminal device cannot receive the update indication of the TA value to the first time.

Based on the above technical solution, the terminal device may determine whether it is still possible to receive uplink resources and/or TA update indication information before the TA value becomes invalid. If the terminal device cannot receive uplink resources and/or TA update indication information, compared to the first time, the terminal device may initiate the random access procedure in advance, thereby further reducing data transmission latency.

It should be noted that, in some embodiments, the time when the SR in the pending state is to be sent after the first time window may be referred to as the third time. The terminal device may trigger random access at a time earlier than the third time. In other words, at any time between the first time when the TA value becomes invalid and the third time, the terminal device may also initiate random access. Continuing to refer to FIG. 3, the terminal device may initiate random access at the time T₅. It should be understood that, compared to the third time, this can also avoid unnecessary waiting by the terminal device to a certain extent, thereby reducing data transmission latency to some extent.

At the time for triggering random access mentioned above, the terminal device may also end the execution of the SR via one or both of the following operations: the terminal device deleting a parameter of the SR, and the terminal device zeroing out a count value of the SR. The deleting the parameters of the SR may be understood as deleting an SR process corresponding to the SR. Zeroing out the count value of the SR means zeroing out the count value of the corresponding SR counter.

At the time for triggering random access mentioned above, the terminal device may directly trigger random access. Alternatively, when the first condition is met, the terminal device may trigger random access. When the first condition is not met, the terminal device may not trigger random access. Alternatively, if the terminal device triggers random access when the first condition is met, it may further execute the random access procedure. if the terminal device triggers random access when the first condition is not met, the random access procedure is not executed.

The first condition may include, for example, a buffer of the terminal device having data required to be transmitted or having data not deleted. The data generally is uplink data. In other words, as long as there is data in the buffer that needs to be transmitted, random access may be triggered. Alternatively, if there is no data that needs to be transmitted in the buffer (for example, if all data in the buffer has been deleted, i.e., the buffer is empty), random access may not be triggered.

It should be understood that since the terminal device's buffer does not have data that needs to be transmitted, if random access is triggered or executed, the terminal device has no data to send even if random access is successful. Therefore, this random access procedure would waste communication resources. Thus, the present disclosure determines whether to trigger or execute random access by checking if there is data in the buffer that needs to be sent, which can avoid unnecessary resource waste.

In some cases, data needs to be sent to a recipient within a first time period. If the data is not sent within the first time period, it becomes less significant to the recipient. That is to say, even if the data corresponding to the SR is successfully sent after the above first time period, it does not provide any benefit to the recipient. In this case, the data corresponding to the SR required to be sent or the data corresponding to the SR having not been deleted may be understood as the first time period not having expired. In other words, the first condition may include the first time period not expiring.

It should be noted that a time to determine whether the first time period has expired may be the current time, the time when the terminal device triggers random access (e.g., the second time), or the first time. For example, the first condition may include the first time period not expiring at the current time. Alternatively, the first condition may include the first time period not expiring at the time when the terminal device triggers random access. Alternatively, the first condition may include the first time period not expiring at the first time.

In some embodiments, the above first time period may be managed by a discard timer. The discard timer may be maintained by a packet data convergence protocol (PDCP) layer of the terminal device. If the discard timer expires, the transmission of the corresponding data will exceed the latency required by a quality of service (QoS). Even if the transmission is successful, it does not provide any benefit to the recipient. Therefore, when the discard timer expires, the terminal device may delete that data from the buffer. In this case, the first time period not expiring may include the discard timer corresponding to the data in the buffer not expiring. In other words, the first condition may include the discard timer corresponding to the data in the buffer not expiring. In other words, as long as there is at least one discard timer that has not expired, random access may be triggered. Alternatively, if all discard timers have expired, random access may not be triggered. The following describes with the scenarios shown in FIG. 3 and FIG. 5.

For the scenario shown in FIG. 3, if the terminal device does not receive the uplink resources allocated by the network device at the first time (time T₇) (i.e., the update indication of the TA value has still not been received until the TAT has expired), but the discard timer for the uplink data to be transmitted in the terminal device expires before the first time (T₇), the terminal device does not initiate random access.

For the scenario shown in FIG. 5, at time Ts, if the terminal device determines that it will not receive the uplink resources allocated by the network device before the T₇ time at which the TAT has expired (i.e., the update indication of the TA value has still not been received until the TAT has expired), but the data to be uploaded corresponding to the SR expires before time T₇, the terminal device does not initiate random access.

It should be noted that, in the case where the terminal device does not initiate or execute the random access procedure, as long as the data to be transmitted in the terminal device's buffer does not need to be transmitted (e.g., all discard timers have expired), the terminal device may still end the execution of the SR via one or both of the following operations: zeroing out the count value of the SR and deleting the parameter of the SR.

The above describes the method embodiments of the present disclosure in detail, and the following describes the apparatus embodiments of the present disclosure in detail. It should be understood that the description of the method embodiments corresponds to the description of the apparatus embodiments, so parts that are not described in detail may refer to the previous method embodiments.

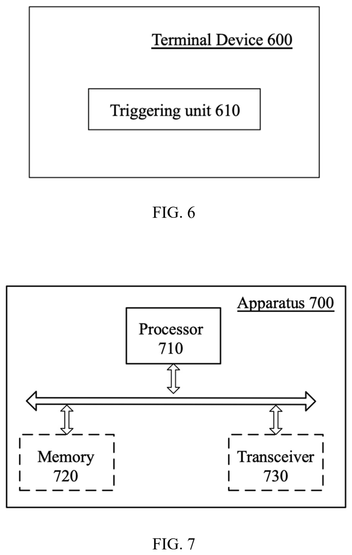

FIG. 6 is a schematic structural diagram of a terminal device 600 provided in an embodiment of the present disclosure. The terminal device 600 may include a triggering unit 610.

The triggering unit 610 is configured to trigger a random access procedure at or before a first time when a TA value becomes invalid, if the first time is within a first time window and an SR in a pending state exists. The first time window is a time window during which the network device does not receive uplink signals.

In some embodiments, triggering the random access procedure at or before the first time includes: triggering the random access procedure before the first time.

In some embodiments, the terminal device being unable to receive the update indication of the TA value before the first time includes: the first time being in a second time window, where the second time window is a time window during which the network device does not send downlink signals.

In some embodiments, the random access procedure is triggered at a start time of the second time window.

In some embodiments, the second time window is used to implement network energy saving.

In some embodiments, triggering the random access procedure includes: triggering the random access procedure when a first condition is met.

In some embodiments, the first condition includes that a buffer of the terminal device has data required to be transmitted.

In some embodiments, the buffer of the terminal device having the data required to be transmitted includes: a discard timer corresponding to the data not expiring.

In some embodiments, the first time window is used to implement network energy saving.

In some embodiments, the first time is a time when a time advance timer corresponding to the TA value expires.

In some embodiments, the terminal device 600 is further configured to: delete a parameter of the SR; and/or zero out a count value of the SR.

In optional embodiments, the triggering unit 610 may be a processor 710. The terminal device 600 may further include a memory 720 and a transceiver 730, as shown in FIG. 7.

FIG. 7 is a schematic structural diagram of an apparatus for communication according to an embodiment of the present disclosure. The dashed line in FIG. 7 indicates that the unit or module is optional. The apparatus 700 may be configured to implement the method described in the foregoing method embodiments. The apparatus 700 may be one or more of a chip, a terminal device, or a network device.

The apparatus 700 may include one or more processors 710, and the processor 710 may support the apparatus 700 to implement the method described in the foregoing method embodiments. The processor 710 may be a general-purpose processor or a dedicated processor. For example, the processor may be a central processing unit (CPU). Alternatively, the processor may be another general-purpose processor, a digital signal processor (DSP), an application specific integrated circuit (ASIC), a field programmable gate array (FPGA) or other programmable logic devices, a discrete gate or transistor logic device, a discrete hardware component, or the like. The general-purpose processor may be a microprocessor, or the processor may be any conventional processor or the like.

The apparatus 700 may further include one or more memories 720 storing a program, and the program may be executed by the processor 710 to cause the processor 710 to perform the method described in the foregoing method embodiments. The memory 720 may be independent of the processor 710 or may be integrated into the processor 710.

The apparatus 700 may further include a transceiver 730, and the processor 710 may communicate with another device or chip via the transceiver 730. For example, the processor 710 may perform data transceiving with another device or chip via the transceiver 730.

Embodiments of the present disclosure further provide a computer-readable storage medium, configured to store a program. The computer-readable storage medium may be applied to the terminal or network device provided in the embodiments of the present disclosure, and the program causes the computer to perform the method performed by the terminal or network device in the embodiments of the present disclosure.

Embodiments of the present disclosure further provide a computer program product. The computer program product includes a program. The computer program product may be applied to the terminal or network device provided in the embodiments of the present disclosure, and the program causes the computer to perform the method performed by the terminal or network device in the embodiments of the present disclosure.

Embodiments of the present disclosure further provide a computer program. The computer program may be applied to the terminal or network device provided in the embodiments of the present disclosure, and the computer program causes the computer to perform the method performed by the terminal or network device in the embodiments of the present disclosure.

It should be understood that the terms "system" and "network" may be used interchangeably in the present disclosure. In addition, the terms used in the present disclosure are intended only to explain specific embodiments of the present disclosure and are not intended to limit the present disclosure. The terms "first", "second", "third" and "fourth" in the description and claims as well as the accompanying drawings of the present disclosure are used to distinguish between different objects and not to describe a particular order. Furthermore, the terms "including" and "having", and any variation thereof, are intended to cover non-exclusive inclusion.

In the embodiments of the present disclosure, the term "indication" mentioned in the embodiments of the present disclosure may be a direct indication, or may be an indirect indication, or may indicate that there is an association relationship. For example, A indicates B, which may indicate that A directly indicates B, e.g., B is obtained through A, or may indicate that A indirectly indicates B, e.g., A indicates C and B is obtained through C, or may indicate that A and B have an association relationship.

In the embodiments of the present disclosure, "B corresponding to A" indicates that B is associated with A, and B may be determined based on A. However, it should be further understood that, determining B based on A does not mean that B is determined only based on A, or B may also be determined based on A and/or other information.

In the embodiments of the present disclosure, the term "corresponding" in the embodiments of the present disclosure may indicate that there is a direct correspondence or indirect correspondence between the two, or may indicate that there is an association relationship between the two, or may be relationships such as indicating and being indicated, configuring and being configured, etc.

In the embodiments of the present disclosure, the terms "predefined" and "preconfigured" may be implemented by pre-storing a corresponding code, a table, or another manner that can be used to indicate related information in a device (e.g., a terminal device and a network device), and a specific implementation is not limited in the present disclosure. For example, the predefined may indicate being defined in a protocol.

In the embodiments of the present disclosure, the term "protocol" in the embodiments of the present disclosure may refer to a standard protocol in the field of communications, such as an LTE protocol, an NR protocol, and related protocols applied to a future communications system, which is not limited in the present disclosure.

In the embodiments of the present disclosure, the term "and/or" in this specification is merely an association relationship for describing associated objects, indicating that there are three relationships, e.g., A and/or B may indicate that A exists alone, A and B exist at the same time, and B exists alone. In addition, the character "/" in this specification generally indicates an "or" relationship between the associated objects.

In embodiments of the present disclosure, "including" may indicate either directly or indirectly including. Optionally, references to "including" in embodiments of the present disclosure may be replaced with "indicating" or "used to determine". For example, A including B may be replaced with A indicating B or A used to determine B.

In the embodiments of the present disclosure, in various embodiments of the present disclosure, a size of a sequence number of each process does not mean an execution sequence, and the execution sequence of each process should be determined by its function and internal logic but should not constitute any limitation on an implementation process of the embodiments of the present disclosure.

In the several embodiments provided in the present disclosure, it should be understood that the disclosed system, apparatus, and method may be implemented in other manners. For example, the apparatus embodiments described above are merely illustrative, and the division of the units is merely a logical function division. In actual implementation, there may be alternative division manners, such as combining a plurality of units or components or integrating them into another system, or ignoring or not executing some features. In addition, the shown or discussed mutual coupling or direct coupling or communication connection may be indirect coupling or communication connection through some interfaces, devices, or units, which may be electrical, mechanical, or in other forms.

The units described as separate parts may or may not be physically separate, and parts shown as units may or may not be physical units, i.e., may be located in one position, or may be distributed on a plurality of network units. Some or all of the units may be selected according to actual needs to achieve the objectives of the solutions of the embodiments.

In addition, functional units in the embodiments of the present disclosure may be integrated into one processing unit, or each of the units may exist alone physically, or two or more units are integrated into one unit.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to the embodiments of the present disclosure are all or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium, for example, the computer instructions may be transmitted from a website, a computer, a server, or a data center to another website, computer, server, or data center in a wired (e.g., a coaxial cable, an optical fiber, a digital subscriber line (DSL)) or a wireless (e.g., infrared, wireless, microwave, etc.) manner. The computer-readable storage medium may be any usable medium readable by a computer, or a data storage device, such as a server or a data center including one or more integrated usable media. The usable medium may be a magnetic medium (e.g., a floppy disk, a hard disk, or a magnetic tape), an optical medium (e.g., a digital video disk (DVD)), a semiconductor medium (e.g., a solid state disk (SSD)), or the like.

The foregoing descriptions are merely specific implementations of the present disclosure, but the protection scope of the present disclosure is not limited thereto, and any changes or substitutions may be easily conceived of by a person skilled in the art within the technical scope disclosed in the present disclosure. Therefore, the protection scope of the present disclosure shall be subject to the protection scope of the claims.

## Claims

1. A method for communication, comprising:
triggering, by a terminal device, a random access procedure at or before a first time when a timing advance, TA, value becomes invalid, if the first time is within a first time window and a scheduling request, SR, in a pending state exists;
wherein the first time window is a time window during which a network device does not receive uplink signals.

2. The method according to claim 1, wherein the triggering, by the terminal device, the random access procedure at or before the first time includes:
triggering, by the terminal device, the random access procedure before the first time if the terminal device is unable to receive an update indication of the TA value before the first time.

3. The method according to claim 2, wherein the terminal device being unable to receive the update indication of the TA value before the first time includes:
the first time being in a second time window, wherein the second time window is a time window during which the network device does not send downlink signals.

4. The method according to claim 3, wherein the random access procedure is triggered at a start time of the second time window.

5. The method according to claim 3 or claim 4, wherein the second time window is used to implement network energy saving, NES.

6. The method according to any one of claims 1 to 5, wherein the triggering the random access procedure includes:
triggering the random access procedure when a first condition is met.

7. The method according to claim 6, wherein the first condition includes that a buffer of the terminal device has data required to be transmitted.

8. The method according to claim 7, wherein the buffer of the terminal device having the data required to be transmitted includes: a discard timer corresponding to the data not expiring.

9. The method according to any one of claims 1 to 8, wherein the first time window is used to implement NES.

10. The method according to any one of claims 1 to 9, wherein the first time is a time when a time advance timer corresponding to the TA value expires.

11. The method according to any one of claims 1 to 10, further comprising:
deleting, by the terminal device, a parameter of the SR; and/or
zeroing out, by the terminal device, a count value of the SR.

12. A terminal device, comprising:
a triggering unit, configured to trigger a random access procedure at or before a first time when a timing advance, TA value becomes invalid, if the first time is within a first time window and a scheduling request, SR, in a pending state exists;
wherein the first time window is a time window during which a network device does not receive uplink signals.

13. The terminal device according to claim 12, wherein the triggering the random access procedure at or before the first time includes:
triggering the random access procedure before the first time if the terminal device is unable to receive an update indication of the TA value before the first time.

14. The terminal device according to claim 13, wherein the terminal device being unable to receive the update indication of the TA value before the first time includes:
the first time being in a second time window, wherein the second time window is a time window during which the network device does not send downlink signals.

15. The terminal device according to claim 14, wherein the random access procedure is triggered at a start time of the second time window.

16. The terminal device according to claim 14 or claim 15, wherein the second time window is used to implement network energy saving, NES.

17. The terminal device according to any one of claims 12 to 16, wherein the triggering the random access procedure includes:
triggering the random access procedure when a first condition is met.

18. The terminal device according to claim 17, wherein the first condition includes that a buffer of the terminal device has data required to be transmitted.

19. The terminal device according to claim 18, wherein the buffer of the terminal device having the data required to be transmitted includes: a discard timer corresponding to the data not expiring.

20. The terminal device according to any one of claims 12 to 19, wherein the first time window is used to implement NES.

21. The terminal device according to any one of claims 12 to 20, wherein the terminal device is further configured to:
delete a parameter of the SR; and/or
zero out a count value of the SR.

22. The terminal device according to any one of claims 12 to 21, wherein the first time is a time when a time advance timer corresponding to the TA value expires.

23. A terminal device, comprising a memory and a processor, wherein the memory is configured to store a program, and the processor is configured to invoke the program in the memory to cause the terminal device to perform the method according to any one of claims 1 to 11.

24. An apparatus, comprising a processor, wherein the processor is configured to invoke a program from a memory to cause the apparatus to perform the method according to any one of claims 1 to 11.

25. A chip, comprising a processor, configured to invoke a program from a memory to cause a device on which the chip is installed to perform the method according to any one of claims 1 to 11.

26. A computer-readable storage medium storing a program, wherein the program causes a computer to perform the method according to any one of claims 1 to 11.

27. A computer program product, comprising a program, wherein the program causes a computer to perform the method according to any one of claims 1 to 11.

28. A computer program, wherein the computer program causes a computer to perform the method according to any one of claims 1 to 11.
